Europäisches Patentamt

European Patent Office

Office européen des brevets

(11) Veröffentlichungsnummer: **0 100 888**
**A1**

## (12) EUROPÄISCHE PATENTANMELDUNG

(21) Anmeldenummer: 83106746.7

(22) Anmeldetag: 08.07.83

(51) Int. Cl.³: **F 16 D 69/04**
**F 16 C 33/24**

(30) Priorität: 08.07.82 DE 3225552

(43) Veröffentlichungstag der Anmeldung:
22.02.84 Patentblatt 84/8

(84) Benannte Vertragsstaaten:
AT BE CH DE FR GB IT LI LU NL SE

(71) Anmelder: IHG - Gleitlager GmbH
Fruchtschuppenweg 24
D-7100 Heilbronn(DE)

(72) Erfinder: Öxle, Friedrich
Rebmannstrasse 24
D-7000 Stuttgart(DE)

(72) Erfinder: Schulze-Eyssing, Heinz
Birkenweg 7
D-6909 Dielheim(DE)

(74) Vertreter: Neugebauer, Bernhard
Tölzer Strasse 7
D-7100 Heilbronn(DE)

(54) Gleit- oder Bremsbelag.

(57) Die Erfindung betrifft einen Gleit- oder Bremsbelag,
bestehend aus einem Tragkörper, auf dessen Tragfläche
mittels einer Verbundschicht eine Laufschicht aus Kunststoff
o. dgl. aufgebracht ist. Aufgabe der Erfindung ist es, das
Aufbringen und unlösbare Befestigen der Laufschicht auf der
Verbundschicht zu vereinfachen. Gelöst wird diese Aufgabe
dadurch, daß der Tragkörper (1) auf der Tragfläche als
Verbundschicht eine Überzugsschicht (2) und die Laufschicht
(3) eine Beimengung (4) aus sich mit der Überzugsschicht (2)
verbindendem Material aufweist und daß die Laufschicht 3
durch Versintern von Teilen der Beimengung (4) mit der
Überzugsschicht (2) mit dem Tragkörper (1) verbunden ist.

*FIG. 1*

EP 0 100 888 A1

0100888

- / -

## BEZEICHNUNG
### siehe Titelseite

Die Erfindung betrifft einen Gleit- oder Bremsbelag, bestehend aus einem Tragkörper, auf dessen Tragfläche mittels einer Verbundschicht eine Laufschicht aus Kunststoff o. dgl. aufgebracht ist.

Es sind bereits Gleitlager bekannt, bei denen auf einem metallischen Tragkörper als Verbundschicht eine Schicht aus Bronze porös aufgesintert ist. Auf diese Verbundschicht ist die Laufschicht aus Kunststoff bzw. einem Kunststoffgemisch so aufgebracht, daß sie mit der Bronze verklammert ist. Zur Herstellung dieses unlösbaren Verbundes sind über eine längere Behandlungsstrecke und eine entsprechend längere Zeitspanne genau zu befolgende Verfahrensschritte erforderlich, denn die Behandlungstemperaturen und Metalldosierungen müssen präzise und konstant eingehalten werden, um mit vorgegebener Schichtdicke die gewünschten Eigenschaften hinsichtlich Verbund, Reibungszahl und Verschleißverhalten zu erreichen. Die Herstellung solcher Gleitbeläge und auch entsprechender Bremsbeläge erfordert somit hohen Aufwand und mehrere Arbeitsgänge.

Aufgabe der Erfindung ist es daher, die Herstellung solcher Gleit- oder Bremsbeläge zu vereinfachen und zu verbilligen.

Diese Aufgabe wird durch die Erfindung dadurch gelöst, daß der Tragkörper auf der Tragfläche als Verbundschicht eine Überzugsschicht und die Laufschicht eine Beimengung aus sich mit der Überzugsschicht verbindendem Material aufweist und daß die Laufschicht durch Versintern von Teilen der Beimengung mit der Überzugsschicht mit dem Tragkörper verbunden ist.

Die mit der Erfindung erzielten Vorteile bestehen insbesondere darin, daß die als Verbundschicht dienende Überzugsschicht auf herkömmliche Weise, z.B. galvanisch, auf den Tragkörper aufgebracht werden kann und mit diesem unlösbar verbunden ist. Das Material der Laufschicht enthält neben den die Gleit- oder Bremseigenschaften erzeugenden Bestandteilen auch eine Beimengung aus einem Material, das sich mit dem der Überzugsschicht bei Erhitzen durch Sintern o. dgl. verbindet. Das Sintern stellt einen relativ kurzzeitigen Vorgang dar, der insbesondere in der Temperaturhöhe mit geringen Mitteln und genau gesteuert werden kann. Es läßt sich so in kurzer Zeit, mit hoher Sicherheit und in einem einzigen Arbeitsgang ein unlösbarer Verbund zwischen dem Tragkörper und der Laufschicht herstellen. Die Gleit- oder Bremsbeläge nach der Erfindung zeichnen sich daher durch Kostengünstigkeit und hohe Qualität aus.

Weitere Ausgestaltung der Erfindung sind der folgenden Beschreibung und den Unteransprüchen zu entnehmen.

Ausführungsbeispiele der Erfindung sind in der Zeichnung dargestellt und werden im folgenden näher beschrieben.
Es zeigen:

Fig. 1 einen Schnitt durch den Gleit- oder Bremsbelag;
Fig. 2 einen Schnitt durch eine andere Ausführung des Gleit- oder Bremsbelages.

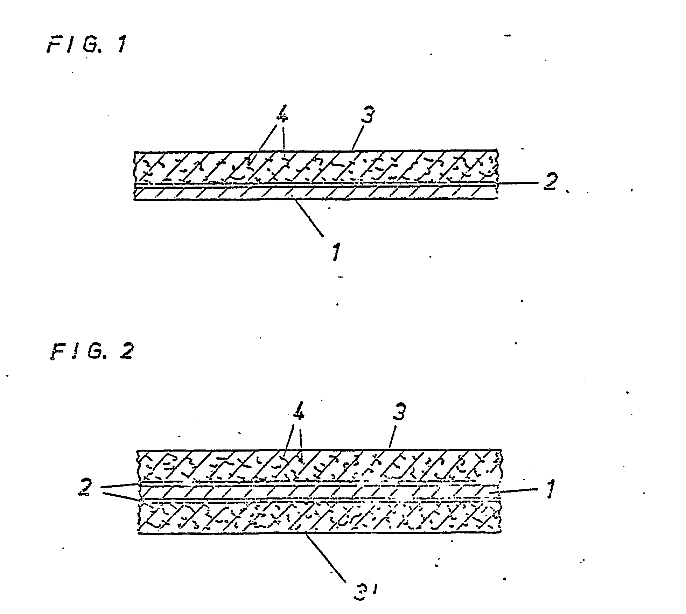

Der Gleit- oder Bremsbelag weist gem. Fig. 1 einen Tragkörper 1, z.B. aus metallischem Flachmaterial, wie Stahlblech, auf. An der als Tragfläche dienenden Seitenfläche des Tragkörpers 1 ist eine als Verbundschicht wirkende Überzugsschicht 2 unlösbar aufgebracht. Diese kann ebenfalls aus metallischem Material, wie z.B. Zinn, bestehen. Natürlich kann der Tragkörper 1 auch beidseitig verzinnt o. dgl. sein. Auf der Überzugsschicht 2 ist eine Laufschicht 3 angeordnet. Diese setzt sich aus dem die Gleit- oder Bremseigenschaften aufweisenden Material, wie Kunststoff oder einem Kunststoffgemisch, und einer Beimengung 4 eines Material zusammen, das sich mit der Überzugsschicht 2 versintern o. dgl. läßt. Insbesondere kann die Beimengung 4 aus dem gleichen Material wie die Überzugsschicht 2 bestehen, z.B. aus Zinn. Nach dem Aufbringen und

Verteilen des pulverförmigen o. dgl. Materials auf der Überzugsschicht 2 kann so durch Erhitzen ein Sintervorgang bewirkt werden, durch den sich die auf der Überzugsschicht 2 liegenden oder an diese anstoßenden Teile der Beimengung 4 mit der Überzugsschicht 2 fest verbinden. Es entstehen so eine große Anzahl von Verbundstellen, die insgesamt der Laufschicht 3 einen unlösbaren Halt auf der Überzugsschicht 2 und damit auf dem Tragkörper 1 geben. Das Sintern selbst wird zweckmäßigerweise im Durchlaufverfahren, insbesondere mittels induktiv erhitzter Walzen, durchgeführt.

Der Gleit- oder Bremsbelag kann mit einer Laufschicht 3 ausgestattet sein, wie in Fig. 1 dargestellt ist. In gleicher Weise läßt sich aber auch der Tragkörper 1 beidseitig mit einer Laufschicht 3 und 3' beschichten, wie in Fig. 2 gezeigt ist. Die beiden Laufschichten 3 und 3' können in ihrer Auslegung gleich sein, sie können aber auch unterschiedlich sein, also verschiedene Reibwerte und/oder Schichthöhen aufweisen.

Auch die Beimengungen 4 können dem jeweiligen Verwendungszweck angepaßt sein. So kann z.B. die Laufschicht 3 etwa 10 bis 40 % Zinn enthalten. Das Tragmaterial wird bandförmig hergestellt und nach dem Beschichten in geeignete Abschnitte gestanzt, die dann gegebenenfalls weiter, z.B. zu Lagerbuch-sen, verformt werden.

- 4 -

Patentansprüche

1. Gleit- oder Bremsbelag, bestehend aus einem Tragkörper, auf dessen Tragfläche mittels einer Verbundschicht eine Laufschicht aus Kunststoff o. dgl. aufgebracht ist, dadurch gekennzeichnet, daß der Tragkörper (1) auf der Tragfläche als Verbundschicht eine Überzugsschicht (2) und die Laufschicht (3) eine Beimengung (4) aus sich mit der Überzugsschicht (2) verbindendem Material aufweist und daß die Laufschicht (3) durch Versintern von Teilen der Beimengung (4) mit der Überzugsschicht (2) mit dem Tragkörper (1) verbunden ist.

2. Gleit- oder Bremsbelag nach Anspruch 1, dadurch gekennzeichnet, daß die Überzugsschicht (2) aus metallischem Material und die Laufschicht (3) aus einem Kunststoff - Metall - Gemisch besteht, dessen metallische Beimengung (4) mit der Überzugsschicht (2) versintert ist.

3. Gleit- oder Bremsbelag nach den Ansprüchen 1 und 2, dadurch gekennzeichnet, daß die Überzugsschicht (2) und die Beimengung (4) der Laufschicht (3) aus Zinn besteht.

4. Gleit- oder Bremsbelag nach den Ansprüchen 1 bis 3, dadurch gekennzeichnet, daß die Laufschicht (3) eine Beimengung (4) von 10 bis 40 % Zinn aufweist.

5. Gleit- oder Bremsbelag nach mindestens einem der Ansprüche 1 bis 4, dadurch gekennzeichnet, daß der Tragkörper (1) plattenförmig ausgebildet und an beiden Seitenflächen mit einer Überzugsschicht (2) und einer Laufschicht (3, 3') beschichtet ist.

0100888

FIG. 1

FIG. 2

## EUROPÄISCHER RECHERCHENBERICHT

Europäisches
Patentamt

| | EINSCHLÄGIGE DOKUMENTE | | EP 83106746.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| Y | <u>DE - A1 - 1 900 459</u> (BERAL-BREMSBELAG KG.) <br><br> * Ansprüche 1,2 * <br><br> -- | 1,2 | F 16 D 69/04 <br> F 16 C 33/24 | |
| Y | <u>GB - A - 830 322</u> (BENDIX AVIATION CORPORATION) <br><br> * Anspruch 1 * <br><br> -- | 1,2 | | |
| A | <u>DE - A1 - 2 703 325</u> (K.SCHMIDT GMBH) <br><br> * Anspruch 1 * <br><br> -- | 1,2 | | |
| A | <u>DE - A1 - 2 166 809</u> (DAIDO METAL CO LTD) <br><br> * Anspruch 1 * <br><br> ---- | 1,2 | RECHERCHIERTE SACHGEBIETE (Int. Cl. ³) | |
| | | | F 16 D 69/00 <br> F 16 C 33/00 | |

Der vorliegende Recherchenbericht wurde für alle Patentansprüche erstellt.

| Recherchenort | Abschlußdatum der Recherche | Prüfer |
|---|---|---|
| WIEN | 04-11-1983 | ROUSSARIAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82